# EUROPEAN PATENT APPLICATION

(11) **EP 2 966 479 A1**
(43) Date of publication of application: **13.01.2016**
(21) Application number: 15174211.1
(22) Date of filing: 29.06.2015
(51) Int. Cl.: G01V 1/00, G01V 1/22, G01V 1/24

(54) **METHOD FOR HARVESTING SEISMIC DATA AND GENERATING SEISMIC OUTPUT FILES**

(30) Priority: 11.07.2014 US 201462023613 P; 02.02.2015 US 201514611827
(71) Applicant: Sercel, 44470 Carquefou (FR)
(72) Inventor: HAMON, Jacques, 44000 NANTES (FR); PICHOT, Yann, 44000 NANTES (FR); WILCOX, Steven William, HOUSTON, TX 77079 (US)
(74) Representative: Vidon Brevets & Stratégie

(57) **Abstract**

A method for harvesting seismic data and generating seismic output files from the seismic data and corresponding source data. The method includes: positioning, in a survey area, data acquisition units associated with sensors; performing at least one seismic event using at least one seismic source; acquiring seismic data in the data acquisition units, the seismic data resulting from the at least one seismic event; deploying at least two data harvester units at fixed positions in the survey area. Each data harvester unit: harvests the seismic data; receives source data relating to the seismic event; generates a partial seismic output file from the harvested seismic data and the received source data; transmits the partial seismic output file to a central unit. The method also comprises generating, by the central unit, a final seismic output file from the partial seismic output files transmitted by the at least two data harvester units.

## Description

### 1. FIELD OF THE DISCLOSURE

The field of the disclosure is that of seismic data acquisition systems. To collect geophysical data, the principle of operation of these systems is as follows: for a given seismic survey, one or several seismic sources (explosives, falling weights, vibrators, air guns, etc.) are activated to propagate omnidirectional seismic wave trains; the wave trains reflected by the layers of the subsurface are detected by seismic sensors, which generate a signal characterizing the reflection of the waves on the geological interfaces of the subsurface.

More specifically, the disclosure relates to a method (and the corresponding seismic data acquisition system) for harvesting seismic data and generating seismic output files from these seismic data and corresponding source data.

The disclosure can be applied notably to the oil prospecting industry using seismic method, but can be of interest for any other field implementing a seismic data acquisition system.

### 2. TECHNOLOGICAL BACKGROUND

Typically, a seismic data acquisition system comprises a network connected to a central unit.

In a first known implementation (wired seismic acquisition system), the network comprises a plurality of wired acquisition lines. Each wired acquisition line comprises nodes (also referred to as "wired data acquisition units") and concentrators, thus all seismic data can be received in the central unit in a real-time manner. The nodes are assembled in series along a telemetry cable and are each associated with at least one seismic sensor (in general, strings of seismic sensors). These nodes process signals transmitted by the seismic sensors and generate seismic data. The concentrators are assembled in series along the telemetry cable and are each associated with at least one of the nodes. Each concentrator receives the seismic data generated by the node(s) with which it is associated.

The sensors are either analog sensors or digital sensors. When analog sensors (also referred to as "geophones") are used, they are generally interconnected by cables to form clusters referred to as "strings of geophones". One or several of these strings of geophones (in series or in parallel) are connected to each node (in this case, a node is also referred to as FDU, for "Field Digitizing Unit") and this latter performs an analog to digital conversion of the signal from the strings of geophones and send the resulting seismic data to the central unit.

When digital sensors are used (e.g. micro-machined accelerometers, also referred to as "MEMS-based digital accelerometer"), they usually are integrated in the nodes (in this case, a node is also referred to as DSU, for "Digital Sensor Unit"), thus eliminating the need of geophone strings. Each node may integrate one or several digital sensors.

In a second known implementation (wireless seismic acquisition system), the network comprises wireless seismic acquisition units (also referred to as RAU, for "Remote Acquisition Units"). Each wireless seismic acquisition unit is independent and integrates (or is connected to) one or several sensors (e.g. geophones, hydrophones, accelerometers...). Each wireless seismic unit aims at fulfilling the following functionalities: digitalization of the sensor signal (in case the sensor is analog), storage of the seismic data acquired, QC ("Quality Control") testing, timing acquisition, position acquisition, communication with other data acquisition units, communication with other devices (such as but not limited to portable harvesting tools, fixed harvester units, gateways, concentrators, unmanned aerial vehicles...), communication with the central unit (if accessible), etc.

In the traditional (wired or wireless) seismic acquisition systems, the seismic data are provided to the central unit. The corresponding source data (i.e. the source data relating to the seismic event from which result the seismic data) are also provided to the central unit. Then the central unit generates a seismic output file, from these seismic data and source data. This operation is also referred to as "data processing".

The seismic output file is usually in conformity with one of the SEG file formats (standards developed by the Society of Exploration Geophysicists (SEG) for storing geophysical data). See for example the "SEG-D file Revision 3.0" which is the new output format designed by the industry. In this format, multiple trace data blocks exist, each including a header (comprising source data) and seismic data.

Depending on the processing domain, the information contained in the seismic output file can vary. In the source domain, seismic data acquired by several data acquisition units are appended to source data relating to a single source shot. In the receiver domain, source data relating to multiple source shots are appended to seismic data acquired by a single data acquisition unit. It has to be noted that data could also be processed in a large variety of domain: common mid point domain, cross spread domain...

In the case of a wired seismic acquisition system, the central unit receives the seismic data through the wired acquisition lines.

In the case of a wireless seismic acquisition system, the central unit can receive the seismic data in different ways, depending on the type of wireless network used:
- one type of wireless system relies on real time data transfer to the central unit, using wireless data transmission such as multi-hop technologies. This kind of technique may not suit all conditions, as a bottleneck at the very last hop, before the central unit, is created. The last wireless seismic acquisition unit (before the central unit) will have to append all data coming from upstream, the appended volume needing to match the available wireless transmission bandwidth in order to respect the real time transmission;
- another type of wireless system relies on autonomous wireless seismic acquisition units (autonomous nodes) which store the acquired seismic data and keep it until they get harvested by an operator equipped with a portable data harvester unit or by a crew member at the base camp once the wireless seismic acquisition units have been retrieved. In alternative solutions, the data harvester unit traverse the survey area in a mobile vehicle such as a drone (or UAV, for "unmanned aerial vehicle"), a vessel, an aircraft... (see e.g. US2014/0078865 and US8,547,796);
- another type of wireless system is hybrid, meaning that some wireless seismic acquisition units are connected wirelessly to a concentrator and some other are linked to it by a cable. Communication between links of cabled acquisition units and wireless acquisition units are achieved thanks to specific field units such as concentrators that manage in particular a wireless link.

In all aforesaid types of wireless system, the autonomy of the wireless seismic acquisition units is a key parameter. It is therefore sought to limit the electronic activity within said wireless seismic acquisition unit.

An alternative known solution is disclosed in US8,135,543, consisting in associating the source parameters with the sensor data (for each seismic trace data) in the data acquisition units, prior to transmitting such data to a central recorder. Thus, making the seismic data process-ready or substantially process-ready at the field data acquisition units. In other words, the data acquisition units provide as an output a trace data block for each trace that includes a header with integrated source and receiver parameters, so that each trace data block is process ready (or near ready) at the data acquisition units.

This alternative known solution requires that the data acquisition unit receives the source parameters. For this purpose the following steps are performed: using a tool to record the source parameters, transmitting the source parameters to a central station computer and receiving the source parameters at each data acquisition unit after the data acquisition unit has been positioned.

There are several drawbacks in the prior art solutions described above.

In the traditional wired or wireless seismic acquisition systems, the central unit generates the seismic output file, from the seismic data and source data. This data processing requires that both seismic data and source data be transmitted to the central unit. Doing so in the receiver domain, the processing time is serialized and therefore can take a long time (unless the central unit comprises multiple processing units in order to process the data in parallel, but this represents an additional cost).

Data acquisition unit are sometimes positioned in areas in which harvesting is difficult either manually or using a drone (UAV). For instance, deep jungle which has difficult access, and conflict zones where access may present safety issues. Therefore there is sometimes a need to limit the access to the data acquisition units, notably in order to meet HSE ("Health, Safety and Environment") requirements.

In the alternative known solution, i.e. in the context of processing the source data and seismic data in the data acquisition unit, the source data are required in the data acquisition unit. But these source data are sometimes not easily accessible in areas where wireless systems are used. Even with the smart use of UAV, transmitting the source data to the plurality of data acquisition units (up to several thousands) could take a long time and increase the risk of missing a transmission with a data acquisition unit. Moreover, in this alternative known solution, the processing of the source data and seismic data in the data acquisition unit increase its power consumption. Source data reception and output file generation and storage are energy consuming processes that will affect the data acquisition unit autonomy.

In autonomous mode (e.g. wireless data acquisition units storing seismic data), one of the key issue is seismic data security. Indeed, in case the data acquisition unit is stolen or damaged, seismic data are potentially lost which incur a more significant loss to the seismic contractor than the cost of the data acquisition unit. As a result, it is of prime importance to secure seismic data.

### 3. SUMMARY

A particular aspect of the present disclosure relates to a method for harvesting seismic data and generating seismic output files from said seismic data and corresponding source data, said method comprising:
positioning, in a survey area, data acquisition units associated with sensors; performing at least one seismic event using at least one seismic source; acquiring seismic data in the data acquisition units, said seismic data resulting from the at least one seismic event;
deploying at least two data harvester units at fixed positions in the survey area;
wherein each data harvester unit:
   * harvests the seismic data acquired by at least one of said data acquisition units;
   * receives source data relating to the at least one seismic event;
   * generates a partial seismic output file from the harvested seismic data and the received source data;
   * transmits the partial seismic output file to a central unit;
and, generating, by the central unit, a final seismic output file from the partial seismic output files transmitted by said at least two data harvester units.

The general principle relies on using a plurality of data harvester units, each being deployed at a fixed position on the field (i.e. is not mobile while active) and being able to harvest seismic data (acquired by one or several data acquisition units), receive source data and generate on the field a partial seismic output file. The fixed position may be devised so as to allow easy access to the data harvester unit and/or to optimize the coverage of data acquisition units by the data harvester unit transmission range.

The proposed solution provides several advantages, in particular:
- data is processed in parallel (each data harvester unit generates a partial seismic output file) resulting in a reduced processing time;
- source data are transmitted to a limited number of field equipment (namely the data harvester units) as compared with a transmission to all data acquisition units;
- power consumption of the data acquisition units is reduced;
- manpower may be limited on the field resulting in enhanced safety in the field, as no human operator is required on the field to allow the data harvester units to harvest the seismic data, neither to allow the data harvester units to receive the source data if the data harvester units receive these source data from a drone (UAV).

According to a particular feature, harvesting of seismic data by a data harvester unit comprises communicating through a wired or wireless transmission link with said at least one of said data acquisition units and/or with a concentrator to which is connected said at least one of said data acquisition units.

According to a particular feature, receiving of source data by a data harvester unit comprises communicating through a wired or wireless transmission link with the at least one seismic source.

According to a particular feature, receiving of source data by a data harvester unit comprises communicating through a wired or wireless transmission link with a gathering device that has previously gathered the source data from the at least one seismic source.

According to a particular feature, said gathering device is an unmanned aerial vehicle.

According to a particular feature, said gathering device is a portable tool carried by an operator.

According to a particular feature, the method comprises the storage by each data harvester unit of the partial seismic output file it has generated.

Thus the seismic data are secured as duplicated in another field equipment (namely the data harvester units), reducing the risk having it lost.

According to a particular feature, said transmitting the partial seismic output file to a central unit comprises communicating through a wired or wireless transmission link with the central unit.

According to a particular feature, said transmitting the partial seismic output file to a central unit comprises communicating through a wired or wireless transmission link with a central access point connected, through a wired or wireless transmission link, with the central unit.

According to a particular feature, said transmitting the partial seismic output file to a central unit comprises communicating through a multi-hop network comprising a plurality of nodes, said nodes including the at least two data harvester units.

According to a particular feature, the method comprises the export by the central unit of the final seismic output file on a storage medium intended for a client.

According to a particular feature, said final seismic ouput file comprises data in the receiver domain.

According to a particular feature, each partial seismic output file generated by a given data harvester unit comprises trace data blocks, each trace data block being specific to a given data acquisition unit and comprising:
- a header comprising at least a part of said source data; and
- at least a part of the seismic data acquired by said given data acquisition unit; said method further comprising, by the central unit:
- detecting redundant trace data blocks comprised in different partial seismic output files but specific to a same data acquisition unit; and
- filtering or combining the detected redundant trace data blocks.

Another particular aspect of the present disclosure relates to a system configured for harvesting seismic data and generating seismic output files from said seismic data and corresponding source data, said system comprising:
- at least one seismic source performing at least one seismic event;
- data acquisition units positioned in a survey area, associated with sensors, and configured to acquire seismic data resulting from the at least one seismic event;
- at least two data harvester units, deployed at fixed positions in the survey area, each data harvester unit being configured to:
   * harvest the seismic data acquired by at least one of said data acquisition units;
   * receive source data relating to the at least one seismic event;
   * generate a partial seismic output file from the harvested seismic data and the received source data;
   * transmit the partial seismic output file to a central unit;
- a central unit configured to generate a final seismic output file from the partial seismic output files transmitted by said at least two data harvester units.

Another particular aspect of the present disclosure relates to a data harvester unit configured to:
- harvest seismic data acquired by at least one of a plurality of data acquisition units;
- receive source data relating to at least one seismic event;
- generate a partial seismic output file from the harvested seismic data and the received source data; and
- transmit the partial seismic output file to a central unit.

In other words, the data harvester unit comprises: means for harvesting seismic data acquired by at least one of a plurality of data acquisition units; means for receiving source data relating to at least one seismic event; means for generating a partial seismic output file from the harvested seismic data and the received source data; and means for transmitting the partial seismic output file to a central unit.

Advantageously, the data harvester unit is configured to implement the steps it performs in the method as described above (for harvesting seismic data and generating output files), in any of its various embodiments.

According to a particular feature, the data harvester unit comprises a power source and a waterproof and shock-resistant housing.

### 4. LIST OF FIGURES

Other features and advantages of embodiments shall appear from the following description, given by way of indicative and non-exhaustive examples and from the appended drawings, of which:
- Figure 1 provides a schematic illustration of a system according to a first embodiment;
- Figure 2 provides a schematic illustration of a system according to a second embodiment;
- Figure 3 provides a schematic illustration of a system according to a third embodiment; and
- Figure 4 is a flowchart of a method according to a particular embodiment.

### 5. DETAILED DESCRIPTION

In all of the figures of the present document, identical elements and steps are designated by the same numerical reference sign.

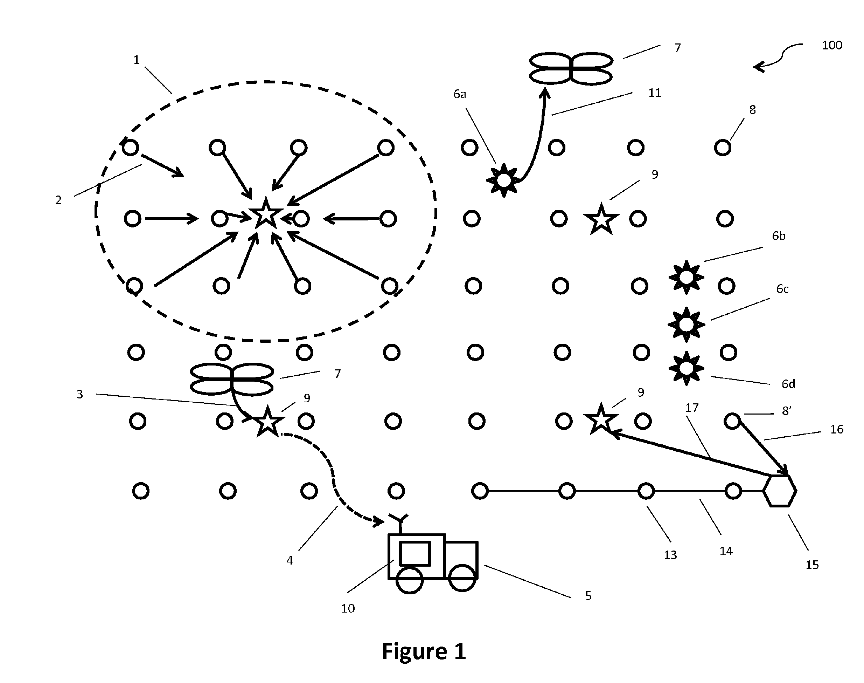

**Figure 1** illustrates a seismic acquisition system 100 according to a first embodiment.

This system comprises wireless data acquisition units 8, to which seismic sensors (such as geophone, hydrophones, accelerometers...) are connected. These seismic sensors are not represented in figure 1 for clarity. It should be noted they could be integrated to the data acquisition units 8.

Also, seismic survey 100 comprises wired data acquisition units 13, linked one to another thanks to a telemetry line 14. Sensors may also be connected (or integrated) to the wired data acquisition units 13. The group of data acquisition units 13 is connected to a concentrator 15, which ensures the power supply, timing management and communication management on the telemetry line 14.

It should be noted that at least some of the wireless data acquisition units (see for example the one referenced 8') may communicate wirelessly with the concentrator 15 through a transmission link 16.

A central unit 10 (also referred to as "central controller unit") is based in a recorder truck 5. This central unit 10 is configured to carry out wireless transmissions.

Field data harvester units 9 are positioned across the survey area. They are configured to carry out wireless transmissions in a transmission range 1, in order to communicate with wireless data acquisition units 8 using a transmission link 2, or with concentrators 15 using a transmission link 17. In a preferred implementation, field data harvester units 9 are positioned so that all the data acquisition units 8 are covered by the transmission range of at least one of the field data harvester units 9.

Seismic sources 6 are mobile across the survey area. They could be single such as the seismic source 6a or conducted as a fleet such as the group of seismic sources 6b, 6c and 6d. A seismic source 6 records source data for each shot it triggers. These data are descriptive of the source shot characteristics. When source configuration is clustered in a fleet, source data of each seismic source could be combined all together so as to form a unique source data. When a source is triggered, seismic data are acquired by the data acquisition units and source data are recorded by the seismic source(s). To the seismic data could therefore be associated a corresponding source data.

Gathering devices 7 (also referred to as "remote equipment") are deployed on the field. For instance, in the drawing, the shown gathering devices 7 are drones, but they could be any type of unmanned vehicles, or portable devices carried by operators. The gathering devices 7 can communicate with the seismic sources 6a-6d using a (wired or wireless) transmission link 11. For instance, source data are uploaded into the gathering devices 7. The gathering devices 7 can also communicate with the field data harvester units 9 using a (wired or wireless) transmission link 3. The field data harvester units 9 for instance download the source data (previously uploaded from the seismic sources into the gathering devices 7).

In an alternative embodiment, the field data harvester units 9 can communicate directly (through a wired or wireless transmission link) with at least one of the seismic sources 6a-6d. For example, the communication of a given field data harvester unit 9 with a given source is direct when they are in their respective transmission range, and via a gathering device 7 otherwise.

Finally, the field data harvester units 9 are able to communicate with the central unit 10 using a (wired or wireless) transmission link 4. For example, the communication of a given field data harvester unit 9 with the central unit 10 is wired when they are close to each other, and wirelessly otherwise.

Each field data harvester unit 9 is configured to:
- harvest seismic data from one or several data acquisition units 8 and/or 13 (through the transmission links 2 and 17);
- receive the source data (through the transmission link 3);
- generate a partial seismic output file from the harvested seismic data and the received corresponding source data; and
- transmit the partial seismic output file to the central unit 10 (through the transmission link 4).

Each field data harvester unit 9 comprises a power source and a robust, preferably waterproof and shock-resistant, housing. In other words, it is a ruggedized field proven equipment, as opposed to today's harvesting equipment that are usually tablets or laptops, equipped with screens. Consequently the field data harvester units 9 can be transported on the field.

The data acquisition units 8, 13, the field data harvester units 9, the central unit 10, the concentrators 15, the gathering devices 7 include electronic circuitry configured to perform their respective functions. For example, each of them may be implemented in hardware only or a combination of hardware and software. In one embodiment, several of them are implemented at least in part by a processor and a non-transitory computer-readable medium storing instructions, which when executed by the processor configure the processor to perform one or more of the desired functions.

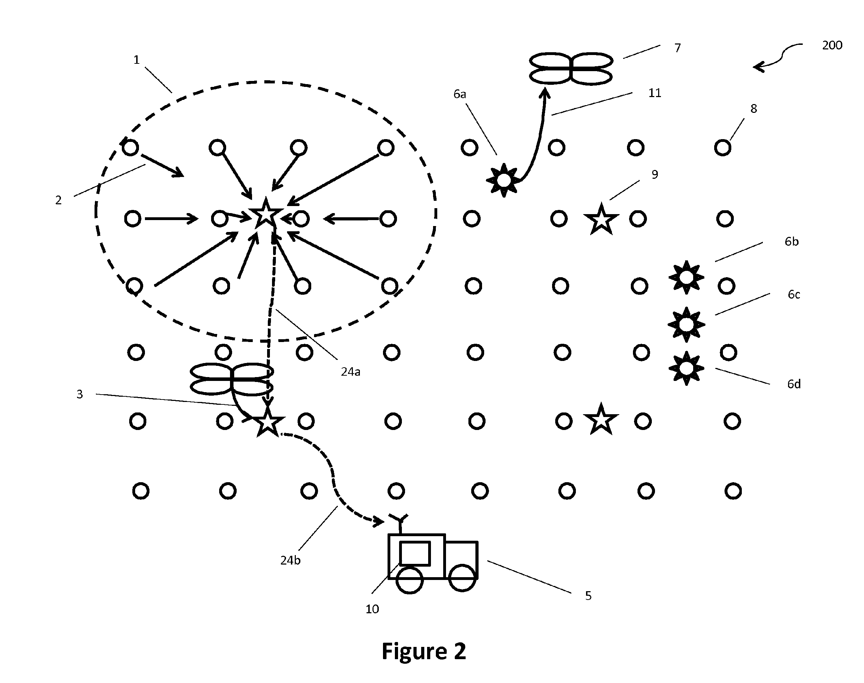

**Figure 2** illustrates a seismic acquisition system 200 according to a second embodiment. It differs from the system 100 of figure 1 in particular in that the field data harvester units 9 communicate one with another, up to the central unit 10, thanks to communication links 24a and 24b, and potentially repeat field data harvester unit information to transmit them to the central unit 10. In other words, there is a multi-hop network having as nodes the field data harvester units 9.

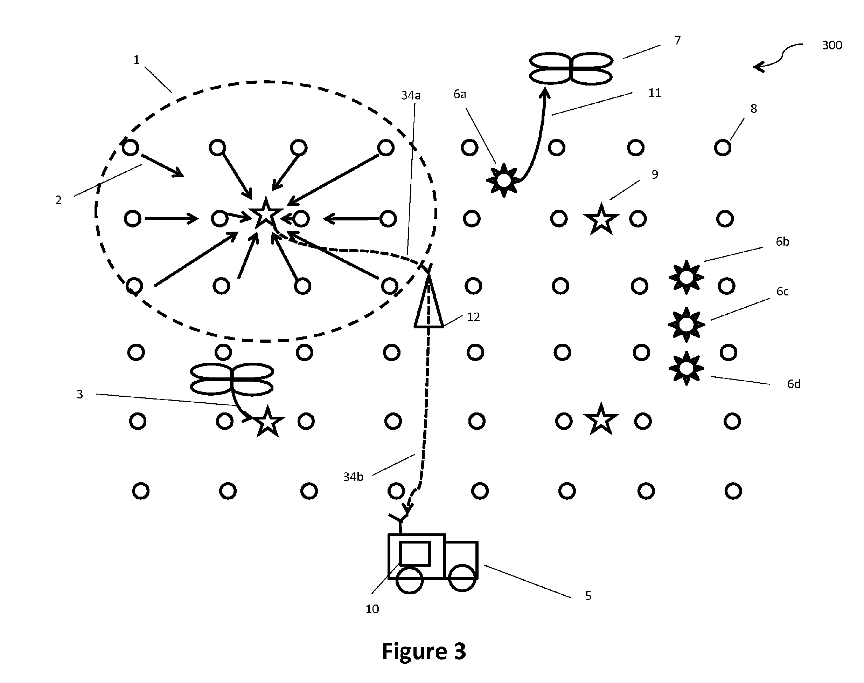

**Figure 3** illustrates a seismic acquisition system 300 according to a third embodiment. It differs from the system 100 of figure 1 in particular in that the field data harvester units 9 are connected to a central access point 12 (through a communication link 34a) which is connected to the central unit 10 (through a communication link 34b). The connection to the central access point is either wireless or wired.

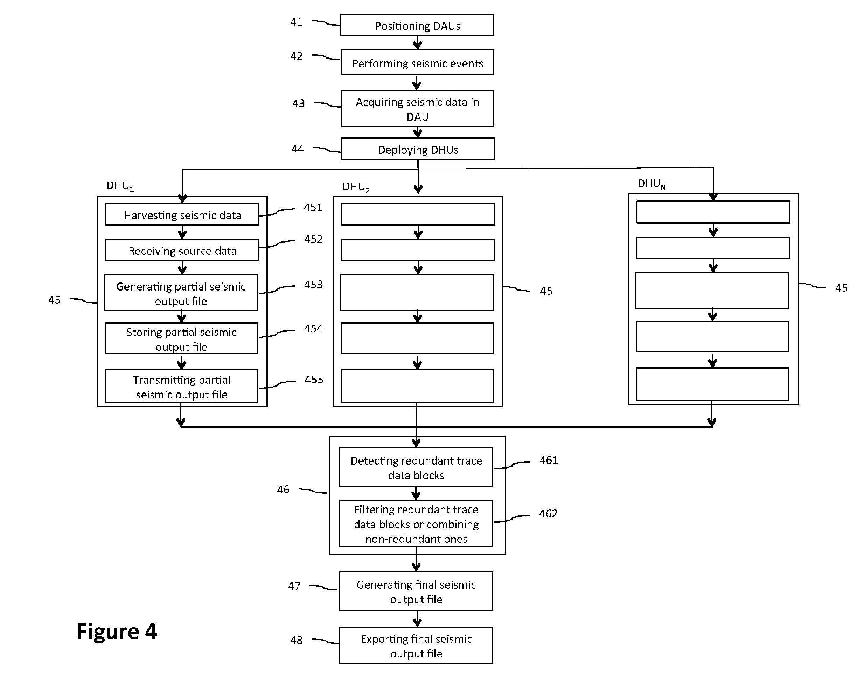

**Figure 4** is a flowchart of a method according to a particular embodiment, corresponding to the operation of the system according to one of figures 1 to 3.

Step 41 consists in positioning, in the survey area, the data acquisition units 8 and/or 13 (also referred to as "DAU"), to which are connected or integrated sensors.

Step 42 consists in performing at least one seismic event using at least one of the seismic sources 6a-6d.

Step 43 consists in acquiring seismic data (resulting from the at least one seismic event) in the DAUs.

Step 44 consists in deploying the field data harvester units 9 (also referred to as "DHU") at fixed positions in the survey area. Step 44 is indicated as implemented after seismic data being acquired, but the deployment of step 44 could also be made before any of the steps 41, 42, 43 leading to acquisition of the seismic data.

Step 45 is carried out by each of the field data harvester units 9 (i.e. DHU₁, DHU₂, ... DHU_{N}, with N the number of field data harvester units 9) and comprises:
- in sub-step 451, harvesting the seismic data acquired by the data acquisition units 8 and/or 13 with which the field data harvester unit 9 can communicate;
- in sub-step 452, receiving source data relating to the at least one seismic event;
- in sub-step 453, generating a partial seismic output file from the harvested seismic data and the received source data. In a particular implementation, the partial seismic output file comprises trace data blocks (e.g. according to the SEG-D file format). Each trace data block is specific to a given data acquisition unit and comprises a header, comprising at least a part of the source data, and at least a part of the seismic data acquired by the data acquisition unit;
- in sub-step 454, storing the partial seismic output file;
- in sub-step 455, transmitting the partial seismic output file to the central unit 10.

This is performed through the transmission link 4 in figure 1, through the transmission links 24a and 24b in figure 2 (use of the multi-hop network) and through the transmission links 34a and 34b in figure 3 (use of the central access point 12).

Step 46 is carried out by the central unit 10 and consists in detecting redundant trace data blocks comprised in different partial seismic output files but specific to a same data acquisition unit (sub-step 461) and filtering or combining the detected redundant trace data blocks (sub-step 462). For example, filtering consists in keeping only one of the detected redundant trace data blocks, and combining consists in appending non redundant trace data blocks.

Step 47 is also carried out by the central unit 10 and consists in generating a final seismic output file from the partial seismic output files transmitted by the field data harvester units 9.

Step 48 is also carried out by the central unit 10 and consists in exporting the final seismic output file on a storage medium intended for a client. Before exporting, the final seismic output file may be subject to a particular processing (correlation, stack...).

Although the present disclosure has been described with reference to one or more examples, workers skilled in the art will recognize that changes may be made in form and detail without departing from the scope of the disclosure and/or the appended claims.

## Claims

1. A method for harvesting seismic data and generating seismic output files from said seismic data and corresponding source data, said method comprising:
positioning (41), in a survey area, data acquisition units (8, 13) associated with sensors;
performing (42) at least one seismic event using at least one seismic source (6);
acquiring (43) seismic data in the data acquisition units, said seismic data resulting from the at least one seismic event;
deploying (44) at least two data harvester units (9) at fixed positions in the survey area, wherein each data harvester unit:
* harvests (451) the seismic data acquired by at least one of said data acquisition units;
* receives (452) source data relating to the at least one seismic event;
* generates (453) a partial seismic output file from the harvested seismic data and the received source data;
* transmits (455) the partial seismic output file to a central unit (10);
and, generating (47), by the central unit, a final seismic output file from the partial seismic output files transmitted by said at least two data harvester units.

2. The method according to claim 1, wherein harvesting (451) of seismic data by a data harvester unit (8, 13) comprises communicating through a wired or wireless transmission link with said at least one of said data acquisition units (8, 13) and/or with a concentrator (15) to which is connected said at least one of said data acquisition units.

3. The method according to any one of the claims 1 to 2, wherein receiving (452) of source data by a data harvester unit (9) comprises communicating through a wired or wireless transmission link with the at least one seismic source (6) or with a gathering device (7) that has previously gathered the source data from the at least one seismic source.

4. The method according to claim 3, wherein said gathering device (7) is an unmanned aerial vehicle or a portable tool carried by an operator.

5. The method according to any one of the claims 1 to 4, comprising the storage (454) by each data harvester unit (9) of the partial seismic output file it has generated.

6. The method according to any one of the claims 1 to 5, wherein said transmitting (455) the partial seismic output file to a central unit comprises communicating through a wired or wireless transmission link with the central unit (10) or with a central access point (12) connected, through a wired or wireless transmission link, with the central unit.

7. The method according to any one of the claims 1 to 6, wherein said transmitting the partial seismic output file to a central unit comprises communicating through a multi-hop network comprising a plurality of nodes, said nodes including the at least two data harvester units (9).

8. The method according to any one of the claims 1 to 7, comprising export (48) by the central unit (10) of the final seismic output file on a storage medium intended for a client.

9. The method according to any one of the claims 1 to 8, wherein said final seismic output file comprises data in the receiver domain.

10. The method according to any one of the claims 1 to 9, wherein each partial seismic output file generated by a given data harvester unit (9) comprises trace data blocks, each trace data block being specific to a given data acquisition unit and comprising:
- a header comprising at least a part of said source data; and
- at least a part of the seismic data acquired by said given data acquisition unit; said method further comprising, by the central unit:
- detecting (461) redundant trace data blocks comprised in different partial seismic output files but specific to a same data acquisition unit; and
- filtering or combining (462) the detected redundant trace data blocks.

11. A data harvester unit (9) comprising:
- means for harvesting seismic data acquired by at least one of a plurality of data acquisition units (8, 13);
- means for receiving source data relating to at least one seismic event;
- means for generating a partial seismic output file from the harvested seismic data and the received source data; and
- means for transmitting the partial seismic output file to a central unit (10).

12. The data harvester unit according to claim 11, comprising a power source and a waterproof and shock-resistant housing.

13. A system configured for harvesting seismic data and generating seismic output files from said seismic data and corresponding source data, said system comprising:
- at least one seismic source (6) performing at least one seismic event;
- data acquisition units (8, 13) positioned in a survey area, associated with sensors, and configured to acquire seismic data resulting from the at least one seismic event;
- at least two data harvester units (9) according to claim 11 or 12, deployed at fixed positions in the survey area;
- a central unit (10) comprising means for generating a final seismic output file from the partial seismic output files transmitted by said at least two data harvester units.
